# EUROPÄISCHE PATENTSCHRIFT

(11) **EP 1 220 564 B1**
(45) Veröffentlichungstag und Bekanntmachung des Hinweises auf die Patenterteilung: **12.07.2006**
(21) Anmeldenummer: 01130530.7
(22) Anmeldetag: 21.12.2001
(51) Int. Cl.: H04Q 11/00

(54) **Schalteinrichtung für ein optischer Übertragungsnetzwerk**
Optical switch for an optical communication network
Commutateur optique pour un réseau de communication optique

(30) Priorität: 28.12.2000 DE 10065499
(43) Veröffentlichungstag der Anmeldung: 03.07.2002
(73) Patentinhaber: ALCATEL, 75008 Paris (FR)
(72) Erfinder: Wolf, Michael, Dr., 74395 Mundelsheim (DE)
(74) Vertreter: Urlichs, Stefan

(56) Entgegenhaltungen:
- EP-A- 0 752 794
- RAMASWAMI R ET AL: "DISTRIBUTED NETWORK CONTROL FOR OPTICAL NETWORKS" IEEE / ACM TRANSACTIONS ON NETWORKING, IEEE INC. NEW YORK, US, Bd. 5, Nr. 6, 1. Dezember 1997 (1997-12-01), Seiten 936-942, XP000734419 ISSN: 1063-6692
- OKAMOTO S ET AL: "Optical path cross-connect systems for photonic transport networks" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA,IEEE, 29. November 1993 (1993-11-29), Seiten 474-480, XP010109628 ISBN: 0-7803-0917-0
- SABELLA R ET AL: "IMPACT OF TRANSMISSION PERFORMANCE ON PATH ROUTING IN ALL-OPTICAL TRANSPORT NETWORKS" JOURNAL OF LIGHTWAVE TECHNOLOGY, IEEE. NEW YORK, US, Bd. 16, Nr. 11, November 1998 (1998-11), Seiten 1965-1971, XP000831709 ISSN: 0733-8724
- BERGER M ET AL: "PAN-EUROPEAN OPTICAL NETWORKING USING WAVELENGTH DIVISION MULTIPLEXING" IEEE COMMUNICATIONS MAGAZINE, IEEE SERVICE CENTER. PISCATAWAY, N.J, US, Bd. 35, Nr. 4, 1. April 1997 (1997-04-01), Seiten 82-88, XP000693608 ISSN: 0163-6804
- GERSTEL O: "ON THE FUTURE OF WAVELENGTH ROUTING NETWORKS" IEEE NETWORK, IEEE INC. NEW YORK, US, Bd. 10, Nr. 6, 1. November 1996 (1996-11-01), Seiten 14-20, XP000637692 ISSN: 0890-8044

## Beschreibung

### Stand der Technik

Die Erfindung geht aus von einer Schalteinrichtung für ein optisches Übertragungsnetzwerk, mit einem ersten Schalter, an den eine Mehrzahl von Fasern angeschlossen sind, die jeweils mit einer Mehrzahl von Kanälen unterschiedlicher Wellenlänge versehen sind, wobei der erste Schalter dazu geeignet ist, jeden Kanal jeder der Fasern mit jedem anderen Kanal aller Fasern zu verbinden.

Eine derartige Schalteinrichtung ist beispielsweise als Digital Cross Connect Switch (DXC) bei einem Wavelength Division Multiplex (WDM) Übertragungsnetzwerk bekannt. Die Schalteinrichtung kann dort als elektrischer oder optischer Matrixschalter realisiert sein, mit dem jeder Kanal einer beliebigen Faser mit jedem Kanal aller anderen Fasern verbunden werden kann. Die Patentanmeldung EP0752794 beschreibt eine entsprechende Schalteinrichtung.

Die stark ansteigende Anzahl von zu schaltenden Kanälen auf den einzelnen Fasern hat zur Folge, daß auch die Anzahl der möglichen Schaltverbindungen in der die Fasern verbindenden Schalteinrichtung drastisch ansteigt. Diese große Anzahl von möglichen Schaltverbindungen kann mit der bekannten Schalteinrichtung nicht mehr sinnvoll realisiert werden.

### Aufgabe und Vorteile der Erfindung

Aufgabe der Erfindung ist es, eine Schalteinrichtung für ein optisches Übertragungsnetzwerk zu schaffen, das eine sinnvolle Realisierung einer großen Anzahl von Schaltverbindungen ermöglicht.

Diese Aufgabe wird bei einer Schalteinrichtung der eingangs genannten Art erfindungsgemäß dadurch gelöst, daß mindestens ein Kanal der Fasern nicht an den ersten Schalter, sondern an einen zweiten Schalter angeschlossen ist, wobei der zweite Schalter nur dazu geeignet ist, jeden Kanal einer ersten der Fasern mit jedem Kanal einer zweiten der Fasern zu verbinden.

Einerseits ist die erfindungsgemäße Schalteinrichtung nicht mehr dazu geeignet, daß jeder Kanal einer beliebigen Faser mit jedem Kanal aller anderen Fasern verbunden werden kann. Dies kann jedoch ohne weiteres dadurch kompensiert werden, daß mit Hilfe eines übergeordneten Managementsystems das gesamte Übertagungsnetzwerk bzw. die damit aufzubauenden Verbindungen global gesteuert werden.

Andererseits besteht der wesentliche Vorteil der erfindungsgemäßen Schalteinrichtung jedoch in dessen geringem Bauteileaufwand. Aufgrund der Tatsache, daß nicht mehr jeder Kanal mit allen anderen Kanäle verbunden werden muß, kann ein wesentlich einfacherer und damit kostengünstigerer erster Matrixschalter verwendet werden. Diejenigen Kanäle, die nicht an diesen Matrixschalter angeschlossen sind, können dann mit Hilfe eines ebenfalls relativ einfachen und kostengünstigen zweiten Matrixschalters miteinander verbunden werden. Insgesamt ist dabei der Aufwand für die beiden erfindungsgemäßen Matrixschalter wesentlich geringer als für einen Matrixschalter nach dem Stand der Technik, mit dem jeder Kanal mit allen anderen Kanälen verbunden werden kann.

Bei einer vorteilhaften Weiterbildung der Erfindung ist mindestens ein Kanal der Fasern nicht an den ersten Schalter und nicht an den zweiten Schalter, sondern an einen Verstärker angeschlossen, wobei der Verstärker nur dazu geeignet ist, jeden Kanal einer ersten der Fasern mit dem zugehörigen Kanal gleicher Wellenlänge einer zweiten der Fasern zu verbinden.

Mit Hilfe des Verstärkers ist es damit auf einfache Weise möglich, ein zu übertragendes Signal innerhalb der erfindungsgemäßen Schalteinrichtung zu verstärken. Trotzdem ist es auch bei dieser Weiterbildung der Erfindung mit Hilfe des übergeordneten Managementsystems ohne weiteres möglich, jede erwünschte Verbindung innerhalb des Übertragungsnetzwerks aufzubauen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

- Figur 1: zeigt ein schematisches Blockschaltbild eines ersten Ausführungsbeispiels einer erfindungsgemäßen Schalteinrichtung,
- Figur 2: zeigt eine schematische Darstellung von Verbindungen mittels Schalteinrichtungen nach der Figur 1,
- Figur 3: zeigt ein schematisches Blockschaltbild eines zweiten Ausführungsbeispiels einer erfindungsgemäßen Schalteinrichtung, und
- Figur 4: zeigt eine schematische Darstellung von Verbindungen mittels Schalteinrichtungen nach der Figur 3.

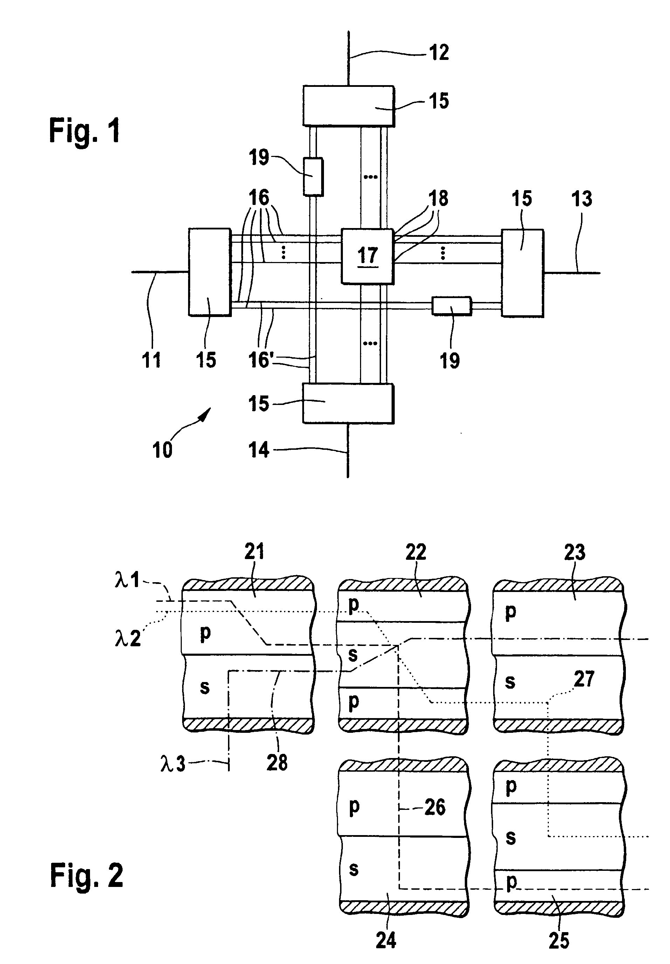

In der Figur 1 ist eine digitale Schalteinrichtung 10 dargestellt, die dazu vorgesehen ist, vier optische Fasern 11, 12, 13, 14 miteinander zu verbinden. Die Schalteinrichtung 10 kann dabei als elektrischer oder als optischer Schalter ausgebildet sein. Die Schalteinrichtung 10 stellt einen sogenannten "Digital Cross Connect Switch (DXC)" dar.

Bei den an die Schalteinrichtung 10 angeschlossenen Fasern 11, 12, 13, 14 können optische Signale auf einer Mehrzahl von Kanälen 16 übertragen werden. Dabei unterscheiden sich die vorhandenen Kanäle durch ihre Wellenlänge. In der Figur 1 ist dies dadurch zum Ausdruck gebracht, daß die Fasern 11, 12, 13, 14 mit Hilfe von Multiplexeinrichtungen 15 auf die einzelnen Kanäle 16 aufteilbar sind, wobei die Kanäle 16 jeder der Fasern 11, 12, 13, 14 sich in der Wellenlänge unterscheiden. Insbesondere gehören die Fasern 11, 12, 13, 14 zu einem sogenannten Wavelength Division Multiplex (WDM) Übertragungsnetzwerk.

Die Schalteinrichtung 10 weist einen ersten Schalter 17 auf, bei dem jeder angeschlossene Eingang 18 mit jedem anderen angeschlossenen Eingang 18 verbunden werden kann. Der Schalter 17 ist vorzugsweise als Matrixschalter ausgebildet. Mit Hilfe des Schalters 17 kann jeder eingehende Kanal 16 ausgangsseitig beliebig weitergeschaltet werden. Die Wellenlänge des weitergeschalteten Kanals 16 kann dabei ebenfalls verändert werden.

Jeder mit dem Schalter 17 verbundene Kanal 16 der Faser 11 kann somit mit jedem Kanal 16 verbunden werden, der zu einer der Fasern 12, 13, 14 gehört und ebenfalls mit dem Schalter 17 verbunden ist. Dies gilt in entsprechender Weise für jeden der Kanäle 16 der Fasern 12, 13, 14.

Es sind nicht alle der zu den Fasern 11, 12, 13, 14 zugehörigen Kanäle 16 an den ersten Schalter 17 angeschlossen. Statt dessen sind ein Teil der Kanäle 16 gar nicht mit dem Schalter 17 verbunden. Diese Kanäle 16 sind an dem Schalter 17 vorbeigeführt. Zur Verdeutlichung sind diese Kanäle 16 in der Figur 1 zusätzlich mit der Bezugsziffer 16' gekennzeichnet.

Die nicht an den ersten Schalter 17 angeschlossenen Kanäle 16' der beiden Fasern 11 und 13 sind über einen zweiten Schalter 19 miteinander verbunden. Entsprechendes gilt für die Kanäle 16' der beiden Fasern 12 und 14. Die Schalter 19 sind vorzugsweise als Matrixschalter ausgebildet. Mit Hilfe des Schalters 19 kann die Wellenlänge eines eingehenden Kanals 16' auf eine unterschiedliche ausgangsseitige Wellenlänge geändert werden. Die Verbindung zwischen den jeweiligen beiden Fasern 11 und 13 oder 12 und 14 bleibt dabei unverändert.

In der Figur 2 sind beispielhafte Verbindungen in schematischer Weise dargestellt, die mit Hilfe einer Mehrzahl der Schalteinrichtungen 10 der Figur 1 aufgebaut werden können. Jede der drei Spalten der in der Figur 2 gezeigten Blöcke 21, 22, 23, 24, 25 wird dabei mittels einer Schalteinrichtung 10 realisiert.

Die Blöcke 21, 23, 24 sind in zwei Bereiche unterteilt, die mit den Bezugszeichen s und p gekennzeichnet sind. Entsprechend sind die Blöcke 22, 25 in drei Bereiche s und p unterteilt. Die Blöcke 21, 22, 23, 24, 25 stellen die Fasern 11, 12, 13, 14 in Abhängigkeit von den Wellenlängen der vorhandenen Kanäle 16 dar. Die Bereiche s und p der Blöcke 21, 22, 23, 24, 25 besitzen dabei unterschiedliche Wellenlängen.

Bei dem Bereich s ("switch") handelt es sich immer um Kanäle 16, die an den ersten Schalter 17 angeschlossen sind, und die daher beliebig weitergeschaltet werden können. Bei dem Bereich p ("pass") handelt es sich immer um Kanäle 16, die nicht an den ersten Schalter 17 angeschlossen sind, deren Wellenlänge jedoch mittels der zweiten Schalter 19 verändert werden kann.

In den Bereichen s der Blöcke 21, 22, 23, 24, 25 der Figur 2 kann eine Verbindung aus einem Block heraus zu einem beliebigen anderen Block geführt werden. Dies stellt letztlich das beliebige Weiterschalten eines Kanals 16 von einer der Fasern 11, 12, 13, 14 zu einer anderen Faser in der Figur 1 dar. In den Bereichen p der Figur 2 kann die Wellenlänge des Kanals 16 nur verändert werden, was in der Figur 2 durch eine entsprechend veränderte Anordnung der jeweiligen Verbindung dargestellt ist.

Die Bereiche s und p von aneinander angrenzenden Blöcken 21, 22, 23 bzw. 24, 25 sind hinsichtlich ihrer Wellenlängen unterschiedlich ausgebildet und sind zumindest teilweise überlappend angeordnet.

Eine erste Verbindung 26 ist in der Figur 2 gestrichelt dargestellt. In dem ersten Block 21 wird die Wellenlänge λ1 des zu dieser Verbindung zugehörigen Kanals 16 derart verändert, daß diese veränderte Wellenlänge in dem nachfolgenden Block 22 einem derjenigen Kanäle 16 zugeordnet ist, die beliebig weiterschaltbar sind. Die Verbindung 26 gehört somit in dem Block 21 zu dem Bereich p, in dem Block 22 jedoch zu dem Bereich s.

In dem Block 22 wird die Verbindung 26 dann auf eine andere Faser weitergeschaltet. Dies ergibt sich daraus, daß die Verbindung 26 aus dem Block 22 heraus und in den Block 24 hineingeführt ist. In dem Block 24 gehört die Verbindung 26 wiederum zu dem Bereich s. Von dem Block 24 ist die Verbindung 26 dann in den Bereich p des Blocks 25 weitergeleitet.

Insgesamt ist damit der Kanal 16 mit der Wellenlänge λ1 einer durch den Block 21 repräsentierten ersten Faser auf eine beliebige, durch den Block 24 repräsentierte zweite Faser weitergeschaltet.

Eine zweite Verbindung 27 ist in der Figur 2 gepunktet dargestellt. Bei dieser Verbindung 27 wird die Wellenlänge λ2 des zugehörigen Kanals 16 erst in dem Block 22 verändert. Danach wird in dem Block 23 die Verbindung 27 an den Block 25 weitergeschaltet. Damit ist der Kanal 16 mit der Wellenlänge λ2 von dem Block 21 an den Block 25 weitergeschaltet.

Eine dritte Verbindung 28 ist in der Figur 2 strichpunktiert dargestellt. Bei dieser Verbindung 28 wird der Kanal 16 mit einer Wellenlänge λ3 in den Bereich s des Blocks 21 eingeleitet. In dem Block 22 wird die Wellenlänge innerhalb des Bereichs s derart geändert, daß der Kanal 16 dann in dem Block 23 dem Bereich p zugeordnet ist. In dem Block 22 wird also der Kanal 16 über den zugehörigen ersten Schalter 17 weitergeschaltet, während in dem Block 23 der Kanal 16 an dem zugehörigen ersten Schalter 17 vorbeigeführt ist.

Die Schalteinrichtung 10 der Figur 1 kann man sich als Autobahnkreuzung vorstellen. Es gibt durchgehenden Verkehr, der in der Figur 2 durch die Bereiche p ("pass") der einzelnen Blöcke realisiert ist. Weiterhin gibt es Abbiegeverkehr, der in der Figur 2 durch die Bereiche s ("switch") der einzelnen Blöcke realisiert ist. Der durchgehende Verkehr kann auf den Abbiegeverkehr wechseln, was in der Figur 2 einer Veränderung der Wellenlänge entspricht.

Bei der Schalteinrichtung 10 ist es erforderlich, eine Verbindung zwischen bestimmten Kanälen 16 bestimmter Fasern 11, 12, 13, 14 mit Hilfe eines übergeordneten Managementsystems zu steuern. Dieses Managementsystem darf dabei die erwünschten Verbindungen nicht im Sinne von aufeinanderfolgenden Punkt-zu-Punkt-Teilverbindungen aufbauen, sondern muß die durch die Bereich s und p sich ergebenden Randbedingungen für die Weiterschaltung von Verbindungen übergeordnet beachten.

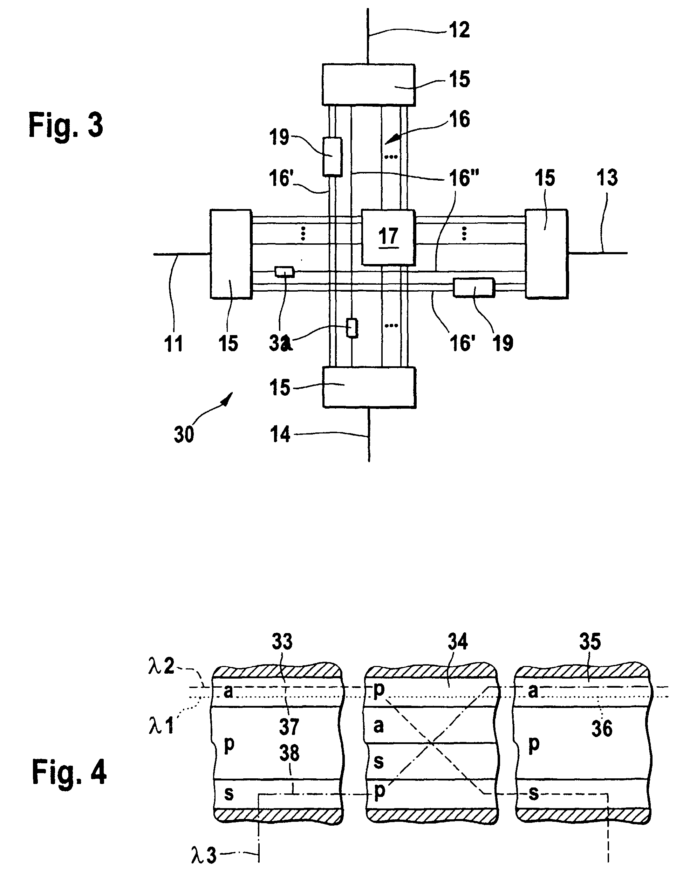

In der Figur 3 ist eine Schalteinrichtung 30 dargestellt, die weitgehend der Schalteinrichtung 10 der Figur 1 entspricht. Einander entsprechende Bauteile sind deshalb mit übereinstimmenden Bezugsziffern gekennzeichnet.

In Vergleich zur Figur 1 weist die Schalteinrichtung 30 der Figur 3 zusätzliche Kanäle 16'' auf, die weder mit dem ersten Schalter 17, noch mit den zweiten Schaltern 19 verbunden sind. Statt dessen enthalten diese Kanäle 16'' innerhalb der Schalteinrichtung 30 keinerlei Schalter, sondern nur jeweils einen Verstärker 32 pro Kanal.

Innerhalb des Kanals 16'' ist somit keinerlei Weiterschaltung, wie auch keinerlei Wellenlängenänderung möglich. Statt dessen wird nur das auf dem Kanal 16'' vorhandene Signal verstärkt.

Man kann sich die Kanäle 16'' im beschriebenen Bild der Autobahn als Überholspuren vorstellen. Auf diesen Überholspuren kann keine Fahrspur gewechselt werden und es kann auch nicht abgebogen werden.

In der Figur 4 sind beispielhafte Verbindungen in schematischer Weise dargestellt, die mit Hilfe einer Mehrzahl der Schalteinrichtungen 30 der Figur 3 aufgebaut werden können. Die Darstellungsweise der Figur 4 entspricht dabei der Darstellungsweise der Figur 3. Entsprechende Funktionen sind deshalb mit übereinstimmenden Bezugsziffern gekennzeichnet.

In der Figur 4 sind Blöcke 33, 34, 35 vorhanden. Wie aus der Figur 4 hervorgeht, ist ein zusätzlicher Bereich a ("amplify") in den Blöcken 33, 34, 35 vorhanden, der letztlich denjenigen Kanälen 16'' zugeordnet ist, die keinen der Schalter 17 oder 19, sondern nur den Verstärker 32 enthalten. Wie ebenfalls aus der Figur 4 hervorgeht, sind die Bereiche a, p und s einander überlappend angeordnet. Insbesondere wechseln sich die Bereiche a und p in aufeinanderfolgenden Blöcken 33, 34, 35 jeweils ab.

Eine erste Verbindung 36 ist in der Figur 4 gepunktet dargestellt. Diese Verbindung 36 kennzeichnet einen Kanal 16, der sich in dem Block 33 in dem Bereich a, in dem Block 34 in dem Bereich p und in dem Block 35 wieder in dem Bereich a befindet. Dieser Kanal 16 wird somit in jedem zweiten aufeinanderfolgenden Block 33, 35 verstärkt und muß nur eine geringe Anzahl von Schaltern 19 in dem Block 34 passieren. Der Kanal 16 besitzt die Wellenlänge λ1, die nicht verändert kann.

Eine zweite Verbindung 37 ist in der Figur 4 gestrichelt dargestellt. Der Kanal 16 dieser Verbindung 37 hat die Wellenlänge λ2. Er befindet sich im Block 33 in dem Bereich a und wechselt dann im Block 34 in den Bereich p. Damit ist es bei der Verbindung 37 in dem Bereich p des Blocks 34 möglich, die Wellenlänge des Kanals 16 zu verändern. Dies hat zur Folge, daß der Kanal 16 der Verbindung 37 sich in dem Block 35 in dem Bereich s befindet und damit eine beliebige Weiterleitung an einen anderen Block möglich ist.

Eine dritte Verbindung 38 ist in der Figur 4 strichpunktiert dargestellt. Bei dieser Verbindung 38 wird der Kanal 16 mit einer Wellenlänge λ3 in den Bereich s des Blocks 33 eingeleitet. In dem Block 34 wird die Wellenlänge innerhalb des Bereichs p derart geändert, daß der Kanal 16 dann in dem Block 35 dem Bereich a zugeordnet ist. Damit ist insgesamt der Kanal 16 zuerst von einem beliebigen anderen Block eingeleitet worden, um dann dem Bereich a des Blocks 35 zugeordnet zu werden.

## Patentansprüche

1. Schalteinrichtung (10, 30) für ein optisches Übertragungsnetzwerk, mit einem ersten Schalter (17), an den eine Mehrzahl von Fasern (11, 12, 13, 14) angeschlossen sind, die jeweils mit einer Mehrzahl von Kanälen (16) unterschiedlicher Wellenlänge versehen sind, wobei der erste Schalter (17) dazu geeignet ist, jeden Kanal (16) jeder der Fasern (11, 12, 13, 14) mit jedem anderen Kanal (16) der Fasern (11, 12, 13, 14) zu verbinden, **dadurch gekennzeichnet, daß** mindestens ein Kanal (16') der Fasern (11, 12, 13, 14) nicht an den ersten Schalter (17), sondern an einen zweiten Schalter (19) angeschlossen ist, wobei der zweite Schalter (19) nur dazu geeignet ist, jeden an den zweiten Schalter angeschlossenen Kanal (16') einer ersten der Fasern (11, 12, 13, 14) mit jedem an den zweiten Schalter angeschlossenen Kanal (16') einer zweiten der Fasern (11, 12, 13, 14) zu verbinden.

2. Schalteinrichtung (30) nach Anspruch 1, **dadurch gekennzeichnet, daß** mindestens ein Kanal (16'') der Fasern (11, 12, 13, 14) nicht an den ersten Schalter (17) und nicht an den zweiten Schalter (19), sondern an einen Verstärker (32) angeschlossen ist, wobei der Verstärker (32) nur dazu geeignet ist, jeden an den Verstärker angeschlossenen Kanal (16'') einer ersten der Fasern (11, 12, 13, 14) mit dem an den Verstärker angeschlossenen zugehörigen Kanal (16'') gleicher Wellenlänge einer zweiten der Fasern (11, 12, 13, 14) zu verbinden.

3. Managementsystem zur Steuerung einer Mehrzahl von Schalteinrichtungen (10, 30) nach Anspruch 1 oder 2, **dadurch gekennzeichnet, dass** das Managementsystem beim Aufbau einer Verbindung die verschiedenen Möglichkeiten der Weiterschaltung von Kanälen (16, 16' 16'') durch die Schalteinrichtungen(10, 30) berücksichtigt.

## Claims

1. Switching device (10, 30) for an optical communication network, with a first switch (17), to which a plurality of fibres (11, 12, 13, 14) is connected, which are each provided with a plurality of channels (16) of different wavelength, the first switch (17) being suitable for connecting any channel (16) of any of the fibres (11, 12, 13, 14) to any other channel (16) of the fibres (11, 12, 13, 14), **characterized in that** at least one channel (16') of the fibres (11, 12, 13, 14) is connected not to the first switch (17), but to a second switch (19), the second switch (19) only being suitable for connecting any channel (16'), which is connected to the second switch, of a first of the fibres (11, 12, 13, 14) to any channel (16'), which is connected to the second switch, of a second of the fibres (11, 12, 13, 14) .

2. Switching device (30) according to claim 1, **characterized in that** at least one channel (16") of the fibres (11, 12, 13, 14) is connected not to the first switch (17) and not to the second switch (19), but to an amplifier (32), the amplifier (32) only being suitable for connecting any channel (16''), which is connected to the amplifier, of a first of the fibres (11, 12, 13, 14) to the related channel (16''), which is connected to the amplifier, of the same wavelength of a second of the fibres (11, 12, 13, 14).

3. Management system for controlling a plurality of switching devices (10, 30) according to claim 1 or 2, **characterized in that** the management system takes account when setting up a connection of the various possibilities of transferring channels (16, 16', 16'') by means of the switching devices (10, 30).

## Revendications

1. Dispositif de commutation (10, 30) pour un réseau de transmission optique, avec un premier commutateur (17), auquel est raccordée une pluralité de fibres (11, 12, 13, 14), qui sont dotées respectivement d'une pluralité de canaux (16) de longueur d'onde différente, le premier commutateur (17) étant approprié pour relier chaque canal (16) de chacune des fibres (11, 12, 13, 14) à chaque autre canal (16) des fibres (11, 12, 13, 14), **caractérisé en ce qu'**au moins un canal (16') des fibres (11, 12, 13, 14) n'est pas raccordé au premier commutateur (17), mais à un second commutateur (19), le second commutateur (19) étant seulement approprié pour relier chaque canal (16'), raccordé au second commutateur, d'une première des fibres (11, 12, 13, 14) à chaque canal (16'), raccordé au second commutateur, d'unc sccondc des fibres (11, 12, 13, 14).

2. Dispositif de commutation (30) selon la revendication 1, **caractérisé en ce qu'**au moins un canal (16") des fibres (11, 12, 13, 14) n'est pas raccordé au premier commutateur (17) et pas au second commutateur (19), mais à un amplificateur (32), l'amplificateur (32) étant approprié seulement pour relier chaque canal (16"), raccordé à l'amplificateur, d'une première des fibres (11, 12, 13, 14) au canal (16") spécifique, raccordé à l'amplificateur, de longueur d'onde identique d'une seconde des fibres (11, 12, 13, 14).

3. Système de gestion pour commander une pluralité de dispositifs de commutation (10, 30) selon la revendication 1 ou 2, **caractérisé en ce que** le système de gestion tient compte lors de l'établissement d'une liaison des différentes possibilités de transmission de canaux (16, 16', 16") par les dispositifs de commutation (10, 30).
